# EUROPEAN PATENT APPLICATION

(11) **EP 4 826 067 A1**
(43) Date of publication of application: **21.10.2026**
(21) Application number: 24904118.7
(22) Date of filing: 29.11.2024
(51) Int. Cl.: C22C 38/22, C22C 38/28, C22C 38/24, C22C 38/32, C21D 8/02, C21D 9/50, C21D 9/46, B23K 11/00, B21C 37/08

(54) **HOT-ROLLED STEEL AND STEEL PARTS FOR ELECTRIC RESISTANCE WELDED PIPE, AND METHOD FOR MANUFACTURING SAME**

(30) Priority: 13.12.2023 KR 20230180593
(71) Applicant: POSCO Co., Ltd, Gyeongsangbuk-do 37859 (KR)
(72) Inventor: KIM, Sunmi, Pohang-si Gyeongsangbuk-do 37859 (KR); KO, Seah, Pohang-si Gyeongsangbuk-do 37859 (KR); SEONG, Mingwan, Pohang-si Gyeongsangbuk-do 37859 (KR); YEO, Seungsu, Pohang-si Gyeongsangbuk-do 37859 (KR)
(74) Representative: Meissner Bolte Partnerschaft mbB
(86) International application number: PCT/KR2024/019388
(87) International publication number: WO 2025/127553

(57) **Abstract**

A method for manufacturing steel parts, according to the present invention, comprises the steps of: (a) manufacturing a hot-rolled steel strip by slitting a hot-rolled steel which comprises, by wt%, greater than 0.38% and less than or equal to 0.55% of C, 0.1-0.4% of Si, 0.3-1.5% of Mn, 0.001-0.05% of Al, 0.05-1.2% of Cr, and the balance of Fe and inevitable impurities, and which meets conditions [1] and [2], condition [1] being 0.5% or less of Mo and condition [2] being at least one from among 0.05% or less of Ti, 0.1% or less of V and 0.005% or less of B; (b) forming a pipe from the hot-rolled steel strip by means of electric resistance welding, thereby manufacturing an electric resistance welded pipe; (c) locally heat-treating the weld zone of the electric resistance welded pipe; and (d) quenching the heat-treated electric resistance welded pipe.

## Description

### [Technical Field]

The present invention relates to a hot-rolled steel and steel parts for an electric resistance welded pipe, and a method for manufacturing the same, in which the service life of the steel part can be improved by reducing a hardness difference between a weld zone and a base metal in an electric resistance welded pipe.

### [Background Art]

In electric motor-powered vehicles, extensive research has been conducted on materials for a rotor shaft, which is a power transmission mechanism that transmits power from a motor.

Since the rotor shaft transmits electrically induced torque from the electric motor through a bipolar connection corresponding to a transmission, high hardness properties are required to withstand a high torque load. In addition, considering that the rotor shaft is used in a fatigue environment subjected to repeated stresses, it is important to improve its service life.

Solid components are widely applied to the rotor shaft, and recently, with the advancement of vehicle efficiency and weight reduction, the demand for hollow rotor shafts has been increasing.

The hollow rotor shafts can be manufactured using two methods.

One method uses a seamless steel pipe and includes removing an inner portion through mechanical machining.

However, due to the nature of the process, this method has a disadvantage of having a non-uniform thickness tolerance in a circumferential direction. Since this characteristic leads to increased noise and vibration as a rotational speed increases, to improve motor performance, components need to be manufactured with smaller thickness tolerances.

Accordingly, research is currently underway to manufacture hollow rotor shafts using an electric resistance welded pipe.

The electric resistance welded pipe refers to a steel pipe manufactured using electric resistance welding.

The electric resistance welded pipe is manufactured by forming and welding steel plates, allowing for a smaller thickness tolerance than a seamless pipe, and when applied to the hollow rotor shafts, the electric resistance welded pipe offers an advantage of reduced noise and vibration.

In this way, during the process of manufacturing a hollow rotor shaft using an electric resistance welded pipe, it is important to manufacture a steel part with overall uniform physical properties and shapes.

However, the steel part inevitably forms a weld zone (weld seam) during electric resistance welding, and thus has one or more weld zones in a longitudinal direction of the steel pipe.

The weld zone is formed when two parts of a material are locally melted, then come into contact and solidify and through the melting and solidification processes, the weld zone acquires a microstructure and properties different from those of the original base metal. The greater the property difference between the weld zone and the base metal, the more likely it is that cracks will occur during machining, thereby significantly reducing the service life of the steel part.

Accordingly, there is a need to develop steel materials for a hollow rotor shaft, which can reduce the property difference between the weld zone and the base metal and improve the service life of the steel part.

### [Disclosure]

### [Technical Problem]

The present invention is directed to providing a hot-rolled steel for an electric resistance welded pipe, which can improve the service life of a steel part by reducing a difference in hardness between a weld zone and a base metal in an electric resistance welded pipe.

The present invention is also directed to providing a steel part using a hot-rolled steel for an electric resistance welded pipe, and a method for manufacturing the same.

Objects of the present invention are not limited to the above object, and other objects and advantages of the present invention which are not mentioned can be understood by the following description and more clearly understood by various embodiments of the present invention. In addition, it will be able to be easily seen that the objects and advantages of the present invention may be achieved by devices and combinations thereof that are described in the claims.

### [Technical Solution]

The hot-rolled steel according to the present invention contains greater than 0.38 and 0.55 wt% or less of carbon (C), 0.1 to 0.4 wt% of silicon (Si), 0.3 to 1.5 wt% of manganese (Mn), 0.001 to 0.05 wt% of aluminum (Al), 0.05 to 1.2 wt% of chromium (Cr), and the balance of iron (Fe) and inevitable impurities, meets one or more of conditions [1] and [2]:
[1] Mo: 0.5 wt% or less and
[2] one or more of 0.05 wt% or less of Ti, 0.1 wt% or less of V, and 0.005 wt% or less of B, and
contains 40 to 95 area% of pearlite based on the total area of 100%.

Other microstructures of the hot-rolled steel may include ferrite, bainite, and martensite.

In addition, the hot-rolled steel may have a Vickers hardness of 150 to 370 Hv.

In addition, the hot-rolled steel may have an elongation of 9 to 30%.

In addition, the hot-rolled steel may have a yield strength of 400 to 700 MPa.

A hot-rolled steel according to another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities.

A hot-rolled steel according to still another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and contains 40 to 95 area% of pearlite based on the total area of 100%.

A hot-rolled steel according to yet another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and has a Vickers hardness of 150 to 370 Hv.

A hot-rolled steel according to yet another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and has an elongation of 9 to 30%.

A hot-rolled steel according to yet another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and has a yield strength of 400 to 700 MPa.

A hot-rolled steel according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and

contains 40 to 95 area% of pearlite based on the total area of 100%.

A hot-rolled steel according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and

has a Vickers hardness of 150 to 370 Hv.

A hot-rolled steel according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and

has an elongation of 9 to 30%.

A hot-rolled steel according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and
has a yield strength of 400 to 700 MPa.

A method for manufacturing steel parts according to the present invention includes (a) manufacturing a hot-rolled steel strip by slitting a hot-rolled steel which includes greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and meets one or more of conditions [1] and [2]:
[1] Mo: 0.5 wt% or less and
[2] one or more of 0.05 wt% or less of Ti, 0.1 wt% or less of V, and 0.005 wt% or less of B,

(b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe.

In the electric resistance welded pipe in operation (b), a relationship between the hardness difference (△H1) between the weld zone and a base metal and a C content may meet △H1≤289.61*exp(0.8944*[C])+67 Hv
(where, when a thickness of the electric resistance welded pipe is t, the base metal refers to a point located at a distance of 5t in a circumferential direction on a circular cross-section with respect to the weld zone).

The electric resistance welded pipe heat-treated in operation (c) or the steel part quenched in operation (d) may meet △H2≤50 Hv when a hardness difference between the weld zone and the base metal is △H2.

Operation (c) may include locally heat-treating the weld zone at an Ar3 temperature or higher for 3 seconds or longer. In addition, operation (c) may further include heat-treating the entire electric resistance welded pipe at an Ar3 temperature or higher after locally heat-treating the weld zone.

Operation (d) may include maintaining the electric resistance welded pipe at a temperature of 820 °C or higher for 10 to 10,000 seconds to form a single austenite phase, and then cooling the electric resistance welded pipe to a temperature of Mf+100 °C or lower at a cooling rate of 10 °C/s or higher.

The steel part quenched in operation (d) may have a Vickers hardness of 600 Hv or higher.

The method may further include (e) tempering the quenched electric resistance welded pipe at a temperature of 150 to 650 °C after operation (d).

The steel part tempered in operation (e) may have a Vickers hardness of 200 Hv or higher.

A method for manufacturing steel parts according to another embodiment of the present invention includes (a) manufacturing a hot-rolled steel strip by slitting a hot-rolled steel, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe.

A method for manufacturing steel parts according to still another embodiment of the present invention includes (a) manufacturing a hot-rolled steel strip by slitting a hot-rolled steel, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein, in the electric resistance welded pipe in operation (b), a relationship between a hardness difference (△H1) between the weld zone and a base metal and a C content meets △H1≤289.61*exp(0.8944*[C])+67 Hv
(where, when a thickness of the electric resistance welded pipe is t, the base metal refers to a point located at a distance of 5t in a circumferential direction on a circular cross-section with respect to the weld zone).

A method for manufacturing steel parts according to yet another embodiment of the present invention includes (a) manufacturing a hot-rolled steel strip by slitting a hot-rolled steel, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein the electric resistance welded pipe heat-treated in operation (c) or the steel part quenched in operation (d) meets △H2≤50 Hv when a hardness difference between the weld zone and a base metal is △H2.

A method for manufacturing steel parts according to yet another embodiment of the present invention includes (a) manufacturing a hot-rolled steel strip by slitting a hot-rolled steel, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein operation (c) includes locally heat-treating the weld zone at an Ar3 temperature or higher for 3 seconds or longer.

A method for manufacturing steel parts according to yet another embodiment of the present invention includes (a) manufacturing a hot-rolled steel strip by slitting a hot-rolled steel, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein the steel part quenched in operation (d) has a Vickers hardness of 600 Hv or higher.

A method for manufacturing steel parts according to yet another embodiment of the present invention includes (a) manufacturing a hot-rolled steel strip by slitting a hot-rolled steel which contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe.

A method for manufacturing steel parts according to yet another embodiment of the present invention includes (a) manufacturing a hot-rolled steel strip by slitting a hot-rolled steel which contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein, in the electric resistance welded pipe in operation (b), a relationship between a hardness difference (△H1) between the weld zone and a base metal and a C content meets △H1≤289.61*exp(0.8944*[C])+67 Hv
(where, when a thickness of the electric resistance welded pipe is t, the base metal refers to a point located at a distance of 5t in a circumferential direction on a circular cross-section with respect to the weld zone).

A method for manufacturing steel parts according to yet another embodiment of the present invention includes (a) manufacturing a hot-rolled steel strip by slitting a hot-rolled steel which contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein the electric resistance welded pipe heat-treated in operation (c) or the steel part quenched in operation (d) meets △ H2≤50 Hv when a hardness difference between the weld zone and a base metal is △H2.

A method for manufacturing steel parts according to yet another embodiment of the present invention includes (a) manufacturing a hot-rolled steel strip by slitting a hot-rolled steel which contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein operation (c) includes locally heat-treating the weld zone at an Ar3 temperature or higher for 3 seconds or longer.

A method for manufacturing steel parts according to yet another embodiment of the present invention includes (a) manufacturing a hot-rolled steel strip by slitting a hot-rolled steel which contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, (b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein the steel part quenched in operation (d) has a Vickers hardness of 600 Hv or higher.

A method for manufacturing steel parts according to yet another embodiment of the present invention includes (a) manufacturing a hot-rolled steel strip by slitting a hot-rolled steel which meets one or more of conditions [1] and [2]:
[1] Mo: 0.5 wt% or less and
[2] one or more of 0.05 wt% or less of Ti, 0.1 wt% or less of V, and 0.005 wt% or less of B,

(b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe.

A method for manufacturing steel parts according to yet another embodiment of the present invention includes (a) manufacturing a hot-rolled steel strip by slitting a hot-rolled steel which meets one or more of conditions [1] and [2]:
[1] Mo: 0.5 wt% or less and
[2] one or more of 0.05 wt% or less of Ti, 0.1 wt% or less of V, and 0.005 wt% or less of B,

(b) forming a pipe from the hot-rolled steel strip by means of electric resistance welding to manufacture an electric resistance welded pipe, (c) locally heat-treating a weld zone of the electric resistance welded pipe, and (d) quenching the heat-treated electric resistance welded pipe, wherein the hot-rolled steel meets at least one of 40 to 95 area% of pearlite based on the total area of 100%, a Vickers hardness of 150 to 370 Hv, an elongation of 9 to 30%, and a yield strength of 400 to 700 MPa.

A steel part according to the present invention includes greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, which meets one or more of conditions [1] and [2]:
[1] Mo: 0.5 wt% or less and
[2] one or more of 0.05 wt% or less of Ti, 0.1 wt% or less of V, and 0.005 wt% or less of B.

The steel part may contain 90 area% or more of martensite or 90 area% or more of tempered martensite based on the total area of 100%.

When a hardness difference between the weld zone and a base metal of the steel part is △H2, the steel part may meet △H2≤50 Hv.

A steel part according to another embodiment of the present invention contains greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities.

A steel part according to still embodiment of the present invention contains greater than 0.38 and 0.55 wt% or less of C, 0.1 to 0.4 wt% of Si, 0.3 to 1.5 wt% of Mn, 0.001 to 0.05 wt% of aluminum (Al), 0.05 to 1.2 wt% of Cr, and the balance of Fe and inevitable impurities and contains 90 area% or more of martensite or 90 area% or more of tempered martensite based on the total area of 100%.

A steel part according to yet embodiment of the present invention contains greater than 0.38 and 0.55 wt% or less of C, 0.1 to 0.4 wt% of Si, 0.3 to 1.5 wt% of Mn, 0.001 to 0.05 wt% of aluminum (Al), 0.05 to 1.2 wt% of Cr, and the balance of Fe and inevitable impurities and meets △H2≤50 Hv when a hardness difference between the weld zone and a base metal of the steel part is △H2.

A steel part according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and contains 90 area% or more of martensite or 90 area% or more of tempered martensite based on the total area of 100%.

A steel part according to yet embodiment of the present invention meets one or more of conditions [1] and [2] below:
[1] Mo: 0.5 wt% or less and
[2] one or more of 0.05 wt% or less of Ti, 0.1 wt% or less of V, and 0.005 wt% or less of B, and meets △H2≤50 Hv when a hardness difference between the weld zone and a base metal of the steel part is △H2.

### [Advantageous Effects]

According to the present invention, the service life of the steel part can be improved by reducing microstructural and hardness differences between the weld zone and the base metal in the electric resistance welded pipe through steel composition control and normalizing heat treatment in the electric resistance welded pipe.

In addition, the steel part can exhibit excellent hardness characteristics of over 600 Hv through quenching after the electric resistance welded pipe is manufactured. As a result, the steel part can have a uniform shape and properties, and at the same time, can significantly reduce cracking during the manufacturing process and can be easily applied to the hollow rotor shafts.

Specific effects together with the above effects are described together with a description of the following detailed matters for carrying out the invention.

### [Description of Drawings]

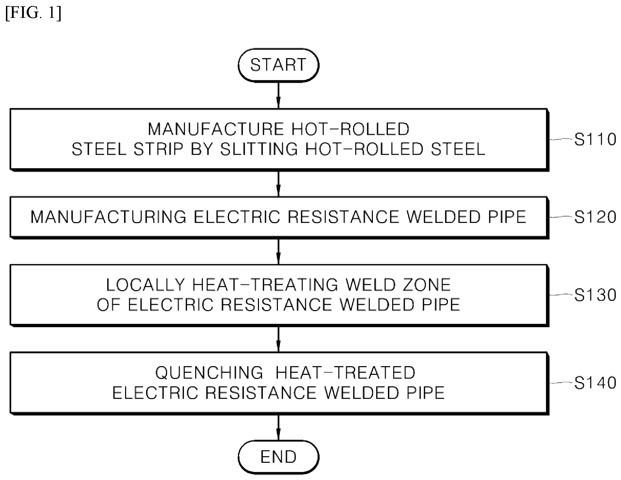

FIG. 1 is a flowchart illustrating a method for manufacturing steel parts according to the present invention.

### [Mode for Invention]

The above-described objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

Hereinafter, hot-rolled steels and steel parts for an electric resistance welded pipe, and a method for manufacturing the same according to some embodiments of the present invention will be described.

During a process of manufacturing a hollow rotor shaft using an electric resistance welded pipe, uniformity of properties in an initial steel pipe is important for manufacturing steel parts with uniform properties and shapes.

A weld zone (weld seam) inevitably formed during electric resistance welding has microstructures and properties different from those of an original base metal through melting and solidification processes.

The base metal of the electric resistance welded pipe is fundamentally composed of ferrite and pearlite structures, and immediately after welding, the weld zone is composed of martensite or bainite structures, leading to the largest hardness difference between the weld zone and the base metal.

The resulting microstructural and hardness differences between the weld zone and the base metal are important factors when the steel part is machined and may cause defects during the manufacturing process.

Accordingly, the inventors of the present invention confirmed that, by performing localized normalizing heat treatment on the weld zone immediately after manufacturing the steel pipe or performing localized normalizing heat treatment on the weld zone and then heat treating the entire electric resistance welded pipe, the property difference between the weld zone and the base metal was reduced.

The localized normalizing heat treatment on the weld zone significantly reduces the hardness difference between the weld zone and the base metal because the weld zone is composed of the same ferrite and pearlite structures as the base metal. In addition, the inventors of the present invention confirmed that, by performing quenching and tempering (QT) heat treatment, the microstructure of the weld zone and the base metal of the steel part was composed of martensite or tempered martensite and could exhibit high hardness.

Accordingly, the steel parts of the present invention, which have already reduced microstructural and hardness differences between the weld zone and the base metal in the electric resistance welded pipe, have a uniform shape and properties, significantly reduces the risk of cracking during the manufacturing process, and are advantageous in that it is suitable for use in a hollow rotor shaft.

### Hot-rolled steel sheet

The hot-rolled steel according to the present invention may contain greater than 0.38 and 0.55 wt% or less of carbon (C), 0.1 to 0.4 wt% of silicon (Si), 0.3 to 1.5 wt% of manganese (Mn), 0.001 to 0.05 wt% of aluminum (Al), 0.05 to 1.2 wt% of chromium (Cr), and the balance of iron (Fe) and inevitable impurities and meet one or more of conditions [1] and [2] below.
[1] Molybdenum (Mo): 0.5 wt% or less
[2] One or more of 0.05 wt% or less of titanium (Ti), 0.1 wt% or less of vanadium (V), and 0.005 wt% or less of boron (B), and

greater than 0.38 to 0.55 wt% or less of carbon (C)

Carbon stably forms austenite and is an alloying element that most significantly influences the enhancement of the strength and hardness of steel. Carbon also enhances hardenability and is the most important element that determines the hardness of martensite after quenching.

As the carbon content increases, toughness decreases and brittleness increases, and thus the carbon content is preferably adjusted according to the application and required level.

When the carbon content is 0.38 wt% or less, it is difficult to secure sufficient martensite hardness, making it difficult to ensure durability, and when the carbon content exceeds 0.55 wt%, toughness decreases, which makes steel pipe manufacturing difficult, and brittleness may occur during quenching heat-treatment.

From this perspective, the carbon content may range from greater than 0.38 to 0.55 wt%, preferably from 0.39 to 0.54 wt%.

Specifically, when the carbon content meets 0.39 to 0.54 wt%, durability, elongation in a hot-rolled steel, and toughness of a final component can be secured.

### Silicon (Si): 0.1 to 0.4 wt%

Silicon has excellent affinity for oxygen and is used as a deoxidizer. Silicon stably forms ferrite and, when dissolved in ferrite, can improve strength. Conversely, silicon can reduce hot workability and toughness, and degrade scale exfoliation at high temperatures.

From this perspective, the silicon content may range from 0.10 to 0.4 wt%, preferably from 0.15 to 0.4 wt%.

### Manganese (Mn): 0.3 to 1.5 wt%

Manganese combines with the impurity sulfur to improve the cleanliness of steel. In addition, manganese can slightly increase strength and hardness and enhance the hardenability of steel, thereby contributing to forming martensite even at low cooling rates. Conversely, when the manganese content is high, a segregation layer can be formed, thereby reducing workability.

From this perspective, the manganese content may range from 0.3 to 1.5 wt%, preferably from 0.45 to 1.3 wt%.

### Aluminum (Al): 0.001 to 0.05 wt%

Aluminum serves as a deoxidizer, can improve the cleanliness of steel, and also form aluminum inclusions at high temperatures, thereby refining the structure of the steel. Conversely, when a large amount of aluminum is added, there may be a concern that material properties deteriorate due to inclusions.

From this perspective, the aluminum content may range from 0.001 to 0.05 wt%, preferably from 0.001 to 0.04 wt%.

### Chromium (Cr): 0.05 to 1.2 wt%

Chromium is a ferrite-stabilizing element that is dissolved in a matrix to secure hardenability. Conversely, when the chromium content is excessive, brittleness due to excessively high hardenability may be a concern.

From this perspective, the chromium content may range from 0.05 to 1.2 wt%, preferably from 0.05 to 1.05 wt%.

### Molybdenum (Mo): 0.5 wt% or less (including 0 wt%)

Molybdenum not only contributes to significantly improving hardenability but also enhances high-temperature strength. When the molybdenum content is excessive, brittleness due to excessively high hardenability may be a concern.

From this perspective, the molybdenum content may be 0.5 wt% or less, preferably 0.45 wt% or less.

### Titanium (Ti): 0.05 wt% or less (including 0 wt%)

Titanium forms TiC and TiCN precipitates in a hot-rolled steel and inhibits austenite grain growth to increase the strength of the hot-rolled steel. In addition, fine precipitates formed during phase transformation of a cooling process after hot rolling significantly enhance the strength of the steel.

When the titanium content is excessive, titanium may be present in the hot-rolled steel in the form of coarse precipitates rather than fine precipitates, which can reduce toughness or deteriorate the performance of heat-treated steel sheets or steel pipe components.

From this perspective, the titanium content may be 0.05 wt% or less, preferably 0.03 wt% or less.

### Vanadium (V): 0.1 wt% or less (including 0 wt%)

Vanadium combines with carbon to form carbides, thereby improving strength and hardness, and in particular, fine precipitates formed during phase transformation of the cooling process after hot rolling significantly enhance the strength of the steel.

When the vanadium content is excessive, the formation of coarse precipitates can lead to reduced toughness and increased cost.

From this perspective, the vanadium content may be 0.1% or less.

### Boron (B): 0.005 wt% or less (including 0 wt%)

Boron segregates at austenite grain boundaries to delay pearlite formation, thereby contributing to improved hardenability of the steel. It is preferable to consider an appropriate boron content range to secure hardenability.

From this perspective, the boron content may be 0.005 wt% or less, preferably 0.004 wt% or less.

In addition to the above-described composition, the steel of the present invention may contain the balance of iron (Fe) and inevitable impurities. The inevitable impurities may be unintentionally incorporated during typical manufacturing processes and thus cannot be excluded.

Among the inevitable impurities, nitrogen (N) stabilizes austenite and forms nitrides, and their contents may be 0.01 wt% or less (including 0 wt%), and when it is unavoidably included during the manufacturing process, their contents may range from greater than 0 to 0.01 wt% or less.

Since nitrogen may react with boron to form precipitates, thereby counteracting the added effects of boron, it is advantageous to lower the nitrogen content to 0.01 wt% or less to exhibit an effective addition effect of boron.

When the nitrogen content exceeds 0.01 wt%, coarse AlN, TiN, or TiCN nitrides may be formed, which may serve as a starting point for fatigue cracks during durability evaluation of steel plates or steel pipes, thereby degrading fatigue durability.

Among the inevitable impurities, oxygen (O) may be 0.01 wt% or less (including 0 wt%), and when it is inevitable during the manufacturing process, it may be greater than 0 and 0.01 wt% or less.

Among the inevitable impurities, phosphorus (P) and sulfur (S) cannot be completely removed during a steelmaking process, and as their contents are controlled to lower levels, cleanliness and workability can be improved. From this perspective, the phosphorus (P) and sulfur (S) contents may each be less than 0.03 wt% (including 0 wt%).

The hot-rolled steel may contain 40 area% or more of pearlite, preferably 40 to 95 area%, based on the total area of 100%, and the microstructure may contain at least 5 area% of ferrite, a small amount of bainite, and a small amount of martensite.

When the microstructure of the hot-rolled steel is primarily composed of pearlite and ferrite, an increase in strength of the hot-rolled steel due to low-temperature structures such as bainite and martensite can be reduced, which is advantageous for forming a pipe. Considering the compositional contents of the present invention, pearlite may have the highest area fraction in the hot-rolled steel, followed by ferrite having the second highest area fraction.

In this way, the hot-rolled steel of the present invention may contain more than 0.38 and 0.55 wt% or less of carbon (C), 0.1 to 0.4 wt% of silicon (Si), 0.3 to 1.5 wt% of manganese (Mn), 0.001 to 0.05 wt% of aluminum (Al), and 0.05 to 1.2 wt% of chromium (Cr) and contain 40 area% or more of pearlite as the main structure, thereby achieving a Vickers hardness of 150 to 370 Hv.

The hot-rolled steel containing 40 area% of pearlite and a Vickers hardness of 150 to 370 Hv are advantageous for manufacturing an electric resistance welded pipe.

When the hot-rolled steel is excessively hard, it may easily crack during the formation of an electric resistance welded pipe, and thus it is preferable that the hot-rolled steel satisfy an elongation of 9% or more and a yield strength of 700 MPa or less to soften the hot-rolled steel, thereby enabling the electric resistance welded pipe to have desired mechanical properties and workability during manufacture. From this perspective, the elongation of the hot-rolled steel may range from 9 to 30%, preferably from 10 to 24%. The elongation refers to a rate at which a material elongates without breaking in a tensile test, and to secure the formability of the hot-rolled steel, the lower limit of the elongation may be 9% or higher, and in terms of materials applicable to the electric resistance welded pipe, the upper limit thereof may be 30% or less.

In addition, the yield strength of the hot-rolled steel may range from 400 to 700 MPa, preferably 450 to 650 MPa.

The yield strength refers to a stress level at which, when a material is subjected to tensile force from both sides, the material initially elongates elastically and returns to its original length after the force is released, but beyond a certain level of force, the material undergoes permanent deformation and does not return to its original shape. In this case, the maximum force required to return to its original state is referred to as yield strength or yield stress, and a material with high yield strength has a strong ability to resist deformation, and a material with low yield strength is easily deformed.

In the present invention, the formability of the hot-rolled steel was secured by meeting a yield strength of 400 to 700 MPa to soften the hot-rolled steel.

Regarding a measurement method, the microstructure observed in the cross-section of the material may be observed throughout the entire thickness range excluding a extreme surface layer of the cross-section and may be typically observed at the 1/4t point.

The Vickers hardness of the weld zone and the base metal may be measured throughout the entire thickness range excluding the extreme surface layer of the cross-section and may be typically measured at the 1/4t point.

### Method for manufacturing electric resistance welded pipe

According to the present invention, steel parts may be manufactured by manufacturing an electric resistance welded pipe using the hot-rolled steel and then performing quenching and tempering. A microstructure difference between the base metal and the weld zone can be reduced through normalizing heat treatment of the weld zone during a process of manufacturing an electric resistance welded pipe, thereby reducing a hardness difference, which contributes to facilitating the manufacture of the steel parts and improving the service life of the steel part.

FIG. 1 is a flowchart illustrating a method for manufacturing steel parts according to the present invention.

Referring to FIG. 1, the method for manufacturing steel parts according to the present invention may include manufacturing a hot-rolled steel strip by slitting a hot-rolled steel (S110), manufacturing an electric resistance welded (ERW) pipe (S120), locally heat-treating a weld zone of the ERW (S130), and quenching and tempering the heat-treated ERW pipe (S140).

### Manufacturing of a hot-rolled steel strip by slitting a hot-rolled steel (S110)

The manufacturing of a hot-rolled steel strip by slitting a hot-rolled steel may include a homogenization treating operation, a hot rolling operation, a cooling operation, and a coiling operation.

A steel slab, which contains one or more of greater than 0.38 to 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and meets [1] Mo: 0.5 wt% or less, and [2] one or more of Ti: 0.05 wt% or less, V: 0.1 wt% or less, and B: 0.005 wt% or less, may be reheated between 1050 to 1300 °C for about 2 hours for a homogenization treatment.

The homogenized steel slab is hot-rolled to a thickness of about 5 to 10 mm at temperature of Ar3 or higher. The finishing hot-rolling temperature is preferably between Ar3 and 1000 °C. When the finish hot-rolling temperature is lower than Ar3, hot rolling is performed in a region in which austenite and ferrite coexist, resulting in non-uniform deformation, deterioration of strip flatness, and stress concentration in a soft ferrite phase, which may increase a risk of sheet fracture. On the other hand, when the finishing hot-rolling temperature exceeds 1000 °C, the surface quality may be degraded due to scale formation.

The cooling and coiling operations are performed at temperatures between 500 and 750 °C.

There are no specific cooling restrictions, but an average cooling rate of 80 °C/s or less is acceptable to secure the pearlite content of 40 area% or more, but the present invention is not limited thereto.

Meanwhile, a coiling temperature is preferably between 500 and 750 °C, and 620 to 720 °C is more preferable to stably form a desired microstructure. When the coiling temperature is lower than 500 °C, the formation of low-temperature structures such as bainite and martensite increases the strength and hardness of the hot-rolled steel, resulting in poor pipe formability, and uneven cooling in a width direction can prevent a uniform microstructure and lead to localized overcooling defects. When the property difference in the width direction is large, welding defects may occur when manufacturing welded steel pipes using a hot-rolled steel.

On the other hand, when the coiling temperature exceeds 750 °C, internal oxidation or scale formation within a hot-rolled coil may occur, resulting in poor surface quality.

Thereafter, a hot-rolled steel strip may be manufactured by slitting the hot-rolled steel in a coil form.

The slitting is a process of dividing a hot-rolled steel in a coil form in a width direction to manufacture a narrow coil that has the same thickness and length as the existing hot-rolled steel in a coil form but has a reduced width. For example, the slitting may cut a steel sheet in a longitudinal direction using a slitting machine or a width cutter.

### The manufacturing of an ERW pipe (S120)

An ERW pipe may be manufactured by forming the hot-rolled steel strip using an ERW method.

The ERW method may melt base metals using electrical resistance to bond them without using separate welding materials.

The ERW method is a process in which two surfaces of a workpiece to be welded are brought into contact, a welding current is directly or indirectly applied using a highfrequency current of 300 to 1000 kHz to generate resistance heat between the contact surfaces, and pressure (squeeze force) is then applied to bond the surfaces.

The base metal of the ERW pipe is typically a hot-rolled steel composed of ferrite and pearlite, and during ERW welding, a material temperature rises near its melting point, around 1400 °C, and is rapidly cooled to 200 °C at a rate of 100 °C/s or more to complete the ERW welding.

In this case, the weld zone is composed of martensite or bainite structures, and the hardness difference between the weld zone and the base metal may be large. When the thickness of the ERW pipe is t, the base metal refers to a point located at a distance of 5t in a circumferential direction on a circular cross-section with respect to the weld zone.

Since a large hardness difference between the weld zone and the base metal may cause defects during a subsequent process of manufacturing steel parts, it is important to reduce the hardness difference between the weld zone and the base metal from the ERW pipe.

From this perspective, before local heat treatment of the weld zone, a relationship between the hardness difference (△H1) between the weld zone and the base metal and the carbon (C) content of the ERW pipe may meet △H1≤289.61*exp(0.8944*[C])+67 Hv.

Here, when the thickness of the ERW pipe is t, the base metal refers to a point located at a distance of 5t in a circumferential direction on a circular cross-section with respect to the weld zone. The width of the weld zone refers to a width of a weld line, which appears as a straight band in the longitudinal direction of the pipe and may be formed as a narrow region of about 6 mm along the circumference of the ERW pipe.

The relationship between △H1 and C content meets △ H1≤289.61*exp(0.8944*[C])+67 Hv, which is advantageous in reducing the hardness difference between the weld zone and the base metal of the ERW pipe.

A method for confirming a relational expression between △H1 and C content in the ERW pipe may include measuring Vickers hardness across the weld line in a donut-shaped cross-section obtained by cutting the ERW pipe in a transverse direction.

### The locally heat-treating of the weld zone of the ERW pipe (S130)

To reduce the hardness difference between the weld zone and the base metal of the ERW pipe, it is preferable to locally heat-treat the weld zone of the ERW pipe.

Since the ERW pipe is typically water-cooled immediately after welding, a low-temperature microstructure represented by martensite is formed in the weld zone, which is characterized by having significantly higher hardness than pearlite and ferrite structures of the base metal (i.e., the hot-rolled steel) outside the weld zone. Since the hardness difference between the weld zone and the base metal causes defects during a subsequent process of manufacturing a component, the hardness difference can be reduced by locally heat-treating the weld zone or heat-treating the entire pipe after locally heat-treating the weld zone.

The process of locally heat-treating the weld zone or by heat-treating the entire pipe after locally heat-treating the weld zone may be performed as a normalizing heat treatment in which slow cooling or air cooling is carried out after austenitizing heat treatment.

Specifically, the weld zone may be locally heat-treated at an Ar3 temperature or higher for 3 seconds or longer. To locally heat treat the weld zone, the temperature may be raised to 800 to 1000 °C, maintained for about 3 to 100 seconds, cooled with oil, and then cooled at a rate of 0.01 °C/sec or more. Immediately after the local heat treatment, the weld zone is composed of the same pearlite and ferrite as the base metal, thereby significantly reducing the hardness difference between the weld zone and the base metal. When the holding time is shorter than about 3 seconds, the heat treatment of the weld zone may be insufficient, leaving low-temperature structures, and thus the hardness difference from the base metal may be large. Conversely, when the holding time is shorter than 100 seconds, grain growth may occur due to under-annealing, which can deteriorate toughness.

After locally heat-treating the weld zone at an Ar3 temperature or higher for 3 seconds or longer, the entire ERW pipe may be heat-treated at an Ar3 temperature or higher. To heat -treat the entire ERW pipe, the temperature is raised to 800 to 1100 °C and then air-cooled to ensure that the weld zone and the base metal may be composed of pearlite and ferrite. When the temperature is lower than 800 °C, austenite monophase formation is insufficient, leading to uneven heat treatment, and when the temperature exceeds 1100 °C, grain growth may occur due to under-annealing, which can deteriorate toughness.

In this way, when the weld zone is locally subjected to normalizing heat treatment, the microstructures of the weld zone and the base metal may be made identical, and thereafter, when the entire ERW pipe is heat-treated, the ERW pipe may be controlled to have a uniform microstructure and mechanical properties throughout the pipe.

From this perspective, when the hardness difference between the weld zone and the base metal is △H2, the heat-treated ERW pipe may have △H2≤50 Hv, preferably 0≤△H2≤40 Hv.

### The quenching of the heat-treated ERW pipe (S140)

When the heat-treated ERW pipe is quenched and tempered (QT), the structures of the weld zone and the base metal may be composed of martensite or tempered martensite, thereby reducing the microstructural and hardness differences between the weld zone and the base metal and securing high hardness. Accordingly, during the process of manufacturing the steel parts, crack occurrence is minimal, and the service life of the steel part can be improved.

In the quenching (hardening heat treatment), the heat-treated ERW pipe may be maintained at 820 to 1100 °C for 10 to 10,000 seconds to achieve a single austenite phase, and then cooled to a temperature of Mf+100 °C or less at a cooling rate of 1 °C/s or higher to produce a martensitic steel.

Preferably, the ERW pipe may be heated to an austenitic single-phase temperature range of 840 to 1100 °C and maintained for 100 to 8,000 seconds, more preferably 200 to 5,000 seconds, to achieve austenitization. When the heating temperature is lower than 820 °C, ferrite or pearlite transformation may occur during the cooling process, thereby preventing uniform martensite formation across the entire thickness, and thus preventing a target hardness from being achieved. When the holding time is less than 10 seconds at 820 °C or higher, it is difficult to secure a uniform microstructure in a thickness direction, and when the holding time exceeds 10,000 seconds, a problem of increased cost may occur without achieving a heat-treatment effect.

During cooling, the cooling may be performed to a martensite temperature range, preferably Mf (martensite end temperature)+100 °C or lower, for example, to a cooling end temperature such as 100 °C, 50 °C, room temperature, etc. at an average cooling rate of preferably 1 to 150 °C/s, more preferably 5 to 150 °C/s. When the cooling is performed at a rate less than 1 °C/s, ferrite or pearlite transformation will occur during the cooling process, making it difficult to achieve the target hardness. In addition, when the cooling end temperature exceeds Mf+100 °C, a bainitic structure may be formed without sufficient martensitic microstructure being secured, making it difficult to achieve the target hardness.

When quenched, the steel part may contain 90 area% or more of martensite as well as greater than 0.38 to 0.55 wt% of a high carbon (C) content, preferably a single martensite phase.

The quenched steel part may exhibit a Vickers hardness of 600 Hv or more, preferably 600 to 750 Hv, at room temperature. Through the quenching, the hardness properties of the welded portion and the base metal of the steel part may be nearly identical.

After the quenching, tempering (tempering) the quenched ERW pipe (steel part) at 150 to 650 °C may be further provided.

The steel part may contain 90 area% or more of tempered martensite through tempering after quenching and have an adjustable hardness, and through the quenching and tempering, the hardness properties of the weld zone and the base metal of the steel part may be nearly identical.

The tempering may be performed by maintaining the quenched steel part at a temperature range of 150 to 650 °C for 10 to 20,000 seconds, preferably 50 to 15,000 seconds, and more preferably 100 to 10,000 seconds. Ductility and toughness can be improved by removing defects such as dislocations that develop during the quenching through tempering. When tempering, the effect is minimal when the holding time is less than 10 seconds, and when the holding time exceeds 20,000 seconds, a problem of increased cost may occur without achieving the heat treatment effect.

In this way, the quenched and tempered steel part may contain 90 area% or more of tempered martensite as well as greater than 0.38 to 0.55 wt% of a high carbon (C) content, preferably a single tempered martensite phase.

In addition, the tempered steel part can secure superior toughness even when its hardness is slightly lower than that of the quenched steel part.

The steel parts of the present invention may be manufactured by locally heat-treating the weld zone to manufacture an ERW pipe having no hardness difference between the weld zone and the base metal, and then performing quenching and manufactured by performing tempering as needed, may contain more than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, and meet one or more of [1] and [2] below.
[1] Mo: 0.5 wt% or less
[2] One or more of 0.05 wt% or less of Ti, 0.1 wt% or less of V, and 0.005 wt% or less of B

The steel part having martensite or tempered martensite as a primary structure has already reduced microstructural and hardness differences from the ERW pipe, making it easy to manufacture with minimal cracking.

From this perspective, when the Vickers hardness difference between the weld zone and the base metal of the steel part is △H2, the steel part may have △H2≤50 Hv, and the steel part may contain a martensitic microstructure after quenching, have a Vickers hardness of 600 Hv or more, contain a tempered martensitic microstructure after tempering, and have a Vickers hardness of 200 Hv or more.

In this way, specific examples of hot-rolled steels for an ERW pipe, steel parts, and methods of manufacturing the same are as follows.

### 1. Hot-rolled steel sheet and manufacture of steel parts using the same

Hot-rolled steel sheet specimens were manufactured by homogenizing steel slabs having compositions shown in Table 1 below through heat treatment at about 1200±50 °C for 2 hours, rough-rolling and finish-rolling the steel slabs at temperatures of Ar3 or higher, and coiling the steel slabs. S-Al refers to soluble aluminum (Sol. Al).

**[Table 1] Chemical composition of steel grades (wt%)**

| | C | Si | Mn | S-Al | Cr | Mo | Ti | V | B |
|---|---|---|---|---|---|---|---|---|---|
| Test specimen 1 | 0.53 | 0.395 | 0.44 | 0.022 | 0.153 | 0.41 | 0 | 0.02 | 0.0025 |
| Test specimen 2 | 0.41 | 0.253 | 1.25 | 0.014 | 0.49 | 0 | 0.027 | 0 | 0.0023 |
| Test specimen 3 | 0.43 | 0.2 | 1.26 | 0.013 | 0.25 | 0 | 0.025 | 0 | 0.0026 |
| Test specimen 4 | 0.41 | 0.203 | 0.88 | 0.01 | 0.98 | 0.198 | 0 | 0 | 0 |
| Test specimen 5 | 0.43 | 0.201 | 1.1 | 0.011 | 0.44 | 0.1 | 0.026 | 0 | 0.0025 |
| Test specimen 6 | 0.44 | 0.206 | 1.22 | 0.01 | 0.49 | 0 | 0.026 | 0.1 | 0.0026 |
| Test specimen 7 | 0.43 | 0.203 | 0.91 | 0.011 | 0.36 | 0.1 | 0.025 | 0.1 | 0.0025 |
| Test specimen 8 | 0.43 | 0.21 | 0.45 | 0.014 | 0.3 | 0.251 | 0.021 | 0 | 0.0022 |
| Test specimen 9 | 0.45 | 0.19 | 0.45 | 0.013 | 0.39 | 0.206 | 0.023 | 0 | 0.0025 |
| Test specimen 10 | 0.46 | 0.19 | 0.5 | 0.016 | 0.49 | 0.305 | 0 | 0 | 0 |
| Test specimen 11 | 0.35 | 0.209 | 0.7 | 0.02 | 0.97 | 0.195 | 0 | 0 | 0 |
| Test specimen 12 | 0.84 6 | 0.138 | 0.385 | 0.015 | 0.131 | 0.003 | 0 | 0.001 | 0 |
| Test specimen 13 | 0.52 | 0.176 | 0.65 | 0.019 | 0.14 | 0 | 0 | 0 | 0 |

Due to property differences between a weld zone and a base metal, steel pipes having the compositions shown in Table 1 were subjected to local normalizing heat treatment immediately after welding by maintaining the weld zone at a temperature of Ar3 or higher for about 3 seconds and then cooling the weld zone to room temperature. Thereafter, the entire steel pipe was heat-treated, maintained at a temperature of Ar3 or higher for 1 minute or more, and cooled to room temperature at a cooling rate of 0.1 °C/s or more.

Accordingly, an ERW pipe having no hardness difference between the weld zone and the base metal was manufactured through normalizing heat treatment after welding.

The hardness of the hot-rolled steels having the above composition were the same as that of the base metals, and the hardness of the weld zones of the manufactured ERW pipes, hardness differences ΔH1 and ΔH2, and flatting test results of the ERW pipe are shown in Table 2 below.
1) Elongation and yield Strength of hot-rolled steel: they were measured at room temperature according to JIS Z 2201.
2) Hardness measurement method for base metal and the weld zone immediately after welding and after post-weld heat treatment: hardness was measured at room temperature using the Vickers hardness and measured at a 1/4t location of a cross-section of a material in a thickness direction.
3) Method of measuring whether cracks occur after 7/8D compression: this test is a weld integrity evaluation method for an ERW pipe according to KS D 3517. When the weld zone of the ERW pipe was compressed by a jig using flat upper and lower portions while oriented at 90° to a compression direction, crack occurrence in the weld zone was determined by visual inspection. Compression was applied until a height reached 7/8 of an outer diameter (D) of the steel pipe. A crack was defined as a defect that is visually observable, has a perceivable depth when touched by hand, and exhibits a crack depth of 20 µm or greater.

**[Table 2]**

| | Hot-rolled steel sheet Elongation (%) | Hot-rolled steel sheet Yield strength (MP a) | Hardness of hot-rolled steel = hardness of base metal (Hv) | Hardness of weld zone (Hv) | Hardness difference (ΔH1) between weld zone and base metal of ERW pipe immediately after welding | 289.61 *exp(0. 8944*[ C])+67 Hv | Hardness difference (ΔH2) between weld zone and base metal of ERW pipe after post-weld heat treatment | Whether crack occurs |
|---|---|---|---|---|---|---|---|---|
| Test specimen 1 | 10 | 534 | 185 | 708 | 523 | 532.2 | 27 | X |
| Test specimen 2 | 20 | 537 | 217 | 624 | 407 | 484.9 | 36 | X |
| Test specimen 3 | 21 | 492 | 183 | 638 | 455 | 492.4 | 25 | X |
| Test specimen 4 | 18 | 549 | 204 | 623 | 419 | 484.9 | 24 | X |
| Test specimen 5 | 18 | 621 | 227 | 638 | 411 | 492.4 | 28 | X |
| Test specimen 6 | 18 | 513 | 193 | 640 | 447 | 496.3 | 17 | X |
| Test specimen 7 | 24 | 487 | 223 | 633 | 410 | 492.4 | 41 | X |
| Test specimen 8 | 18 | 554 | 205 | 641 | 436 | 492.4 | 20 | X |
| Test specimen 9 | 13 | 501 | 207 | 643 | 436 | 500.1 | 17 | X |
| Test specimen 10 | 17 | 534 | 188 | 645 | 457 | 504.0 | 25 | X |
| Test specimen 11 | 7 | 639 | 186 | 656 | 470 | 463.1 | 13 | O |
| Test specimen 12 | 7 | 742 | 272 | 974 | 702 | 684.2 | 17 | O |
| Test specimen 13 | 8 | 537 | 219 | 776 | 557 | 528.1 | 32 | O |

Referring to Table 2, since test specimens 1 to 10 exhibited an elongation of 10 to 24% and a yield strength of 487 to 621 MPa for the hot-rolled steels, indicating that the hot-rolled steel was softened.

In test specimens 1 to 10, the hardness difference (△H1) between the weld zone and the base metal was observed immediately after welding, and it was confirmed that, prior to heat treatment, △H1 met △H1≤289.61*exp(0.8944*[C])+67 Hv. In addition, after local heat treatment of the weld zone followed by overall heat treatment, the hardness difference (△H2) between the weld zone and the base metal was observed to be 50 Hv or less.

In particular, test specimens 1 to 10 exhibited already reduced microstructural and hardness differences in the ERW pipe, resulting in an effect of almost no crack occurrence.

On the other hand, test specimens 11 to 13 exhibited at least one of elongation of less than 9% or yield strength exceeding 700 MPa, indicating a hardened material compared with test specimens 1 to 10, and due to the microstructural difference, crack occurrence was observed.

Steel components were manufactured by quenching (maintaining the manufactured ERW pipes at 880 °C for 2,400 seconds to achieve a single austenite phase, and then cooling the ERW pipes to room temperature at a cooling rate of 100 °C/s) and tempering (maintaining the manufactured ERW pipes at 200 °C, 400 °C, and 650 °C for 3,600 seconds, followed by cooling the manufactured ERW pipes to room temperature) the manufactured ERW pipes.

The hardness and the area fractions of the base metals of the manufactured steel parts are shown in Table 3.

The microstructural area fraction was measured using an optical microscope at a magnification of 50×.

**[Table 3]**

| | Vickers hardness (Hv) of the base metal after heat treatment under the following conditions | | | | Area fraction (%) |
|---|---|---|---|---|---|
| | Quenching | Tempering at 200 °C | Tempering at 400 °C | Tempering at 650 °C | Tempered martensite |
| Test specimen 1 | 703 | 668 | 499 | 313 | ≥95% |
| Test specimen 2 | 651 | 599 | 469 | 290 | ≥95% |
| Test specimen 3 | 661 | 602 | 490 | 294 | ≥95% |
| Test specimen 4 | 638 | 593 | 488 | 222 | 93% |
| Test specimen 5 | 662 | 606 | 487 | 295 | ≥95% |
| Test specimen 6 | 667 | 626 | 517 | 297 | ≥95% |
| Test specimen 7 | 651 | 600 | 494 | 290 | ≥95% |
| Test specimen 8 | 635 | 601 | 457 | 283 | ≥95% |
| Test specimen 9 | 653 | 633 | 472 | 291 | ≥95% |
| Test specimen 10 | 660 | 609 | 496 | 281 | 91% |
| Test specimen 11 | 571 | 528 | 462 | 336 | ≥95% |
| Test specimen 12 | 805 | 644 | 481 | 321 | 71% |
| Test specimen 13 | 683 | 659 | 485 | 233 | 65% |

Referring to Table 3, test specimens 1 to 10 exhibited a Vickers hardness of 600 Hv or higher after quenching, indicating that a tempered martensite fraction of 90% or more was secured in the steel parts.

In particular, test specimens 1 to 10 exhibited a Vickers hardness ranging from 200 to 670 Hv when the tempering temperature ranged from 200 to 650 °C, and a tendency for the Vickers hardness to decrease slightly as the tempering temperature increased was observed. Specifically, a Vickers hardness of 580 to 670 Hv was observed at tempering temperatures of 200 to 230 °C, a Vickers hardness of 440 to 530 Hv was observed at tempering temperatures of 390 to 410 °C, and a Vickers hardness of 200 to 330 Hv was observed at tempering temperatures of 620 to 650 °C.

Test specimen 11 exhibited a tempered martensite fraction of 95% or more, but the Vickers hardness of the steel part after quenching was less than 600 Hv.

Test specimens 12 and 13 exhibited a Vickers hardness of 600 Hv or higher after quenching, but a relatively low microstructural fraction of 75% or less was observed.

Although the present invention has been described above with reference to the exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

## Claims

1. A hot-rolled steel comprising:
greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities,
which meets one or more of conditions [1] and [2] below:
condition [1] Mo: 0.5 wt% or less and condition [2] one or more of Ti: 0.05 wt% or less, V: 0.1 wt% or less, and B: 0.005 wt% or less, and
comprises 40 to 95 area% of pearlite based on the total area of 100%.

2. The hot-rolled steel of claim 1, wherein other microstructures include ferrite, bainite, and martensite.

3. The hot-rolled steel of claim 1, which has a Vickers hardness of 150 to 370 Hv.

4. The hot-rolled steel of claim 1, which has an elongation of 9 to 30%.

5. The hot-rolled steel of claim 1, which has a yield strength of 400 to 700 MPa.

6. A method for manufacturing steel parts, comprising:
(a) manufacturing a hot-rolled steel strip by slitting a hot-rolled steel which includes greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities and meets one or more of conditions [1] and [2]: [1] Mo: 0.5 wt% or less and [2] one or more of 0.05 wt% or less of Ti, 0.1 wt% or less of V, and 0.005 wt% or less of B;
(b) forming a pipe from the hot-rolled steel strip by means of electric resistance welding, thereby manufacturing an electric resistance welded pipe;
(c) locally heat-treating a weld zone of the electric resistance welded pipe; and
(d) quenching the heat-treated electric resistance welded pipe.

7. The method of claim 6, wherein, in the electric resistance welded pipe in operation (b), a relationship between a hardness difference (△H1) between the weld zone and a base metal and a carbon (C) content meets △H1≤289.61*exp(0.8944*[C])+67 Hv
(where, when a thickness of the electric resistance welded pipe is t, the base metal refers to a point located at a distance of 5t in a circumferential direction on a circular cross-section with respect to the weld zone).

8. The method of claim 6, wherein the electric resistance welded pipe heat-treated in operation (c) or the steel part quenched in operation (d) meets △H2≤50 Hv when a hardness difference between the weld zone and a base metal is △H2.

9. The method of claim 6, wherein operation (c) includes locally heat-treating the weld zone at an Ar3 temperature or higher for 3 seconds or longer.

10. The method of claim 6, wherein operation (c) further includes heat-treating the entire electric resistance welded pipe at an Ar3 temperature or higher after locally heat-treating the weld zone.

11. The method of claim 6, wherein operation (d) includes maintaining the electric resistance welded pipe at a temperature of 820 °C or higher for 10 to 10,000 seconds to form a single austenite phase, and then cooling the electric resistance welded pipe to a temperature of Mf+100 °C or lower at a cooling rate of 1 °C/s or higher.

12. The method of claim 6, wherein the steel part quenched in operation (d) has a Vickers hardness of 600 Hv or higher.

13. The method of claim 6, further comprising (e) tempering the quenched electric resistance welded pipe at a temperature of 150 to 650 °C after operation (d).

14. The method of claim 13, wherein the steel part tempered in operation (e) has a Vickers hardness of 200 Hv or higher.

15. A steel part comprising:
greater than 0.38 and 0.55 wt% or less of C, 0.1 to 0.4 wt% of Si, 0.3 to 1.5 wt% of Mn, 0.001 to 0.05 wt% of Al, 0.05 to 1.2 wt% of Cr, and the balance of Fe and inevitable impurities, which meets one or more of conditions [1] and [2]: [1] Mo: 0.5 wt% or less and [2] one or more of 0.05 wt% or less of Ti, 0.1 wt% or less of V, and 0.005 wt% or less of B.

16. The steel part of claim 15, comprising 90 area% or more of martensite or 90 area% or more of tempered martensite based on the total area of 100%.

17. The steel part of claim 15, wherein, when a hardness difference between the weld zone and a base metal of the steel part is △H2, the steel part meets △H2≤50 Hv.
